# EUROPEAN PATENT SPECIFICATION

(11) **EP 0 642 300 B1**
(45) Date of publication and mention of the grant of the patent: **21.01.1998**
(21) Application number: 93913219.7
(22) Date of filing: 27.05.1993
(51) Int. Cl.: A01G 27/00

(54) **APPARATUS FOR WATERING PLANTS**
VORRICHTUNG ZUR BEWÄSSERUNG VON PFLANZEN
APPAREIL UTILISE POUR ARROSER LES PLANTES

(30) Priority: 27.05.1992 GB 9211204
(43) Date of publication of application: 15.03.1995
(73) Proprietor: WILDE, Charles, David, St Leonards-on-Sea, East Sussex TN38 9RR (GB)
(72) Inventor: WILDE, Charles, David, St Leonards-on-Sea, East Sussex TN38 9RR (GB)
(74) Representative: Fry, Alan Valentine
(86) International application number: GB9301111
(87) International publication number: WO9323989

(56) References cited:
- FR-A- 2 641 442
- US-A- 4 085 546
- US-A- 4 347 687
- DATABASE WPI Section PQ, Week 8513, 8 May 1985 Derwent Publications Ltd., London, GB; Class P13, AN 85-080024/13
- DATABASE WPI Section PQ, Week 8335, Derwent Publications Ltd., London, GB; Class P13, AN 83-751041
- DATABASE WPI Section PQ, Week 8449, Derwent Publications Ltd., London, GB; Class P13, AN 84-305740

## Description

This invention relates to apparatus for watering plants and more especially to apparatus for watering plants, seedlings and seeds (all referred to hereinafter simply as"plants") bedded into a growing medium contained within a plastics enclosure such as a grow bag.

Apparatus for watering hydroponic aggregate contained in a garden box is known from US-PS-4085546. This apparatus comprises a water holding reservoir connected through a down-pipe to a housing positioned within the aggregate and connected to an orificed pipe through which water passes to the aggregate so as to reach a certain liquid level within the box.

Grow bags in themselves are well known and generally are accepted as a useful way of growing flowers and produce such as tomatoes in a variety of locations including greenhouses, patios, sun rooms and balconies.

Such a grow bag is disclosed in EP-A-0084938. Grow bags essentially comprise a formulated growing medium sealed within a plastics bag and provide a complete environment in which flowers and crops can be grown.Conveniently, grow bags are marked with lines to indicate to the user where incisions should be made in the plastics covering for the planting of individual seeds or seedlings. Such incisions are normally small in comparison with the overall size of the grow bag to minimise inter alia the effect of evaporation.Relatively small incisions mean that only a small amount of the growing medium is subjected to the effects of sun and wind. This need to minimise the amount of growing medium exposed to the elements has hitherto required that watering of the grow bag contents is effected through the incisions made to receive plants. Watering through these relatively small incisions to an adequate extent to feed all plants bedded in the growing medium is difficult to achieve and almost impossible to check. The alternative is to remove the uppermost side of the plastics covering. Whilst this assists the watering process, it also maximises the effects of evaporation and loss of growing medium. In both cases, the gardener runs the risk of wetting a plants leaves thereby causing plant burn. A further problem associated with grow bags is caused by the fact that they generally have high contents of peat and fibrous material which are both light and easily disturbed by water. If placed in direct sunlight any water added to the growing medium will rapidly evaporate. Once dried, the peat and fibrous material will not accept fresh water readily, choosing instead to float on water added to the bag contents and, in time, to flow over the edges of the plant receiving holes of the bag. Repeated watering tends to erode growing medium from plant-receiving holes of the bag which, in time, can lead to damage to the root systems of the plants, leaving the plants open to possible attack from insect or fungal organisms.

Erosion of discharged peat and water from the bag can also be unsightly, particularly when the bag is positioned on a balcony, patio or the like.

If a grow bag is to be used for produce such as lettuces, a higher density of plants is normally required. This in itself, can create problems in that it is unlikely that water fed to the bag contents will be distributed satisfactorily to all plants present in a bag. Also, the problems referred to above concerning evaporation and erosion are worsened with each hole cut into a grow bag.

The present invention sets out to provide watering apparatus for use in combination with a grow bag which overcomes, or at least alleviates, the problems referred to above.

According to the present invention in one aspect there is provided apparatus for use in combination with a growing medium contained within a plastics bag (hereinafter referred to as a "grow bag"), the apparatus comprising an elongate hollow member formed with a series of apertures along its length suitable to be inserted into one end or side of a grow bag and movable to a position in which it lies on the surface of growing medium present in the grow bag, and a reservoir connected to supply water to the hollow member, whereby the spacings between the apertures and/or dimensions of the apertures are selected such that water from a full reservoir flows to and through each aperture of the hollow member.

The hollow member preferably comprises a pipe which extends outwardly from one
side of the reservoir and communicates therewith through an aperture positioned towards the base of the reservoir. The pipe may be separable from the reservoir and may be connected thereto by a push-fit connection, screw threading or the like. Alternatively, the pipe may be formed integrally with the reservoir The end of the pipe remote from the reservoir is preferably closed by a smoothly contoured cap or plug. By "smoothly contoured" is meant a shape which is generally smooth and one which will not tear a plastics cover of a growing medium if moved relative thereto. In an alternative arrangement, the end of the pipe is deformed to define a smoothly contoured profile.

The individual holes of the series may be spaced apart by distances which vary in relation to the distance of a neighbouring pair of holes from the reservoir. Thus the distance between the neighbouring pair of holes closest to the reservoir may be greater than that between the
neighbouring pair furthest from the reservoir.
Essentially, the respective distances are selected to ensure that when the reservoir is filled, water will flow out from each hole of the series.

Additionally or alternatively, the sizes of individual holes may vary, the hole closest to the reservoir being of smaller area than that of the hole furthest from the reservoir.
Essentially, the respective distances are selected to ensure that when the reservoir is filled, water will flow out from each hole of the series.

Additionally or alternatively, the sizes of individual holes may vary, the hole closest to the reservoir being of smaller area than that of the hole furthest from the reservoir.

The invention will now be described by way of example, only, with reference to the accompanying diagrammatic drawings in which:-
Figure 1 is a side view of watering apparatus for location in a grow bag in accordance with the invention;
Figure 2 is an exploded view of the apparatus shown in Figure 1;
Figures 3, 4 and 5 are respectively perspective, end and side views of a grow bag and watering apparatus in accordance with the invention (Figures 4 and 5 showing the bag in section); and
Figure 6 is a side view of the device illustrated in Figure 3 in use.

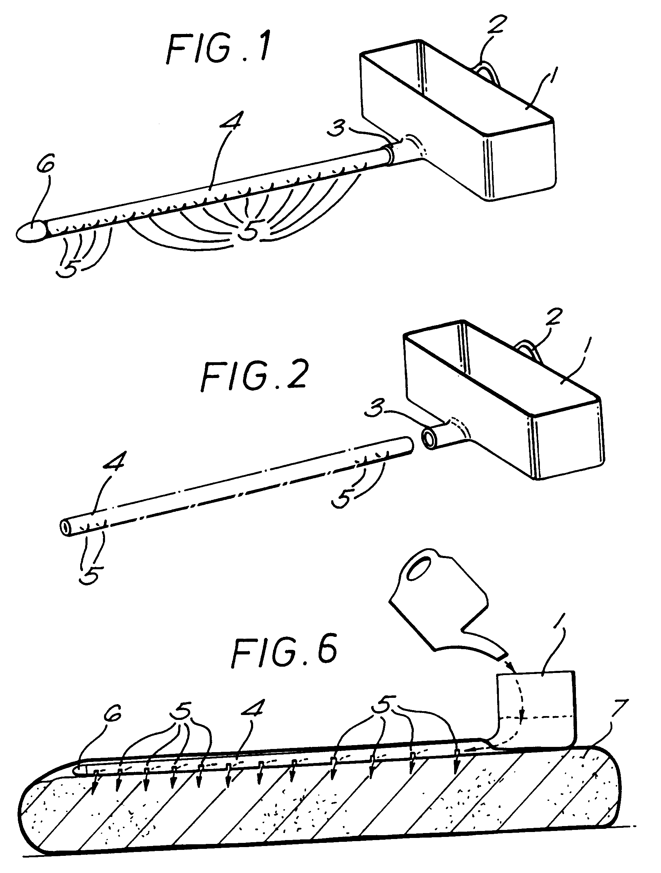

Referring now to the drawings, the watering apparatus illustrated in Figures 1 and 2 comprises an open-topped header tank (1), formed at its base with an outwardly extending spout (3) which receives an elongate pipe (4). Set in the pipe (4) is a series of weep holes (5). The weep holes take the form of slots which are so spaced that the distances between neighbouring holes reduces as the respective holes distance from the spout increases. This spacing is provided to promote a supply of the water to each of the holes positioned along the entire length of the pipe. The holes 5 are also so dimensioned that water introduced into the header tank flows gently out of each hole. The shape of the holes illustrated is generally rectangular about the acurate profile of the pipe. Alternatively, the hole contour may be for example, round or elliptical; also, each weep hole may comprise two or more discrete apertures.

At the end of the supply pipe is fitted a plug or cap (6) formed with a rounded end. A hook, ring or similar hanging point (2) is provided to enable the watering apparatus to be stored more easily.

The header tank and pipe are preferably produced from a plastics material such as UPVC or the like. Other suitable materials may however be employed.

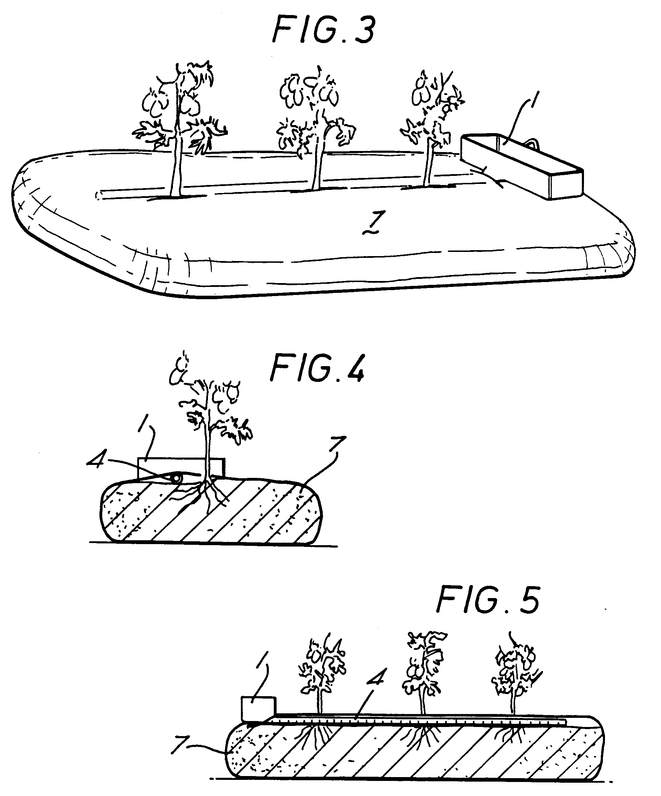

Turning now to Figures 3 to 6, it will be seen that when fitted into a grow bag (7), the watering apparatus is free standing and rests on the upper surface of the grow bag. The pipe (4) is inserted through a small incision made in one end or side of the bag (7) and is gently pushed over the surface of the growing medium present in the bag, the rounded end (6) ensuring that the supply pipe does not penetrate either the growing medium or tear the plastics cover of the bag. When in place, the pipe is positioned between the plastics cover and the upper surface of the growing medium. In this position, the weep holes of the pipe are subjected to atmospheric pressure to ensure that water enters the grow bag medium along the entire length of the pipe as shown in Figure 6. Also, the weep holes are not blocked by the growing medium.

In use, the header tank is filled with water with, possibly, added nutrient such as liquid manure. Additionally or alternatively, a nutrient tablet or block may be positioned in the resevoir. Water entering the pipe initially flows through the weep holes(s) closest to the header tank 2 and then sequentially to each of the weep holes 5 in turn. Thus the entire length of the grown bag medium is effectively watered. Also, the presence of the relatively small apertures required for planting and the water below the plastics cover of the bag provides a humid atmosphere ideal for plant growth.

As shown, the resevoir 1 is formed separate from the pipe 4, possibly by extrusion. This need not be the case, the resevoir and pipe being formed integrally as a single unit by, for example, a moulding process in which two horizontally split half shells are produced and then seam welded

It will be understood that the foregoing is merely exemplary of watering apparatus in accordance with the invention and that modifications can readily be made thereto within the scope of the claims.

## Claims

1. Watering apparatus for use in combination with a growing medium contained within a plastics bag (hereinafter referred to as a "grow bag"), the apparatus comprising an elongate hollow member (4) formed with a series of apertures (5) along its length suitable to be inserted into one end or side of a grow bag (7) and movable to a position in which it lies on the surface of growing medium present in the grow bag, and a reservoir (1) connected to supply water to the hollow member (4), the spacings between and/or dimensions of the apertures (5) being selected such that water from a full reservoir (1) flows to and through each aperture (5) of the hollow member (4).

2. Apparatus as claimed in claim 1 wherein the elongate hollow member comprises a pipe (4) which extends outwardly from one side of the reservoir (1) and communicates therewith through an aperture (3) positioned towards the base of the reservoir.

3. Apparatus as claimed in claim 2 wherein the pipe (4) is separable from the reservoir (1).

4. Apparatus as claimed in claim 2 wherein the pipe (4) is formed integrally with the reservoir (1).

5. Apparatus as claimed in any one of claims 2 to 4 wherein the end of the pipe (4) remote from the reservoir (1) is closed by a smoothly contoured cap or plug (6).

6. Apparatus as claimed in any one of claims 2 to 4 wherein the end of the pipe (4) remote from the reservoir (1) is deformed to define a smoothly contoured profile.

7. Apparatus as claimed in any one of the preceding claims wherein the individual apertures (5) of the series are spaced apart by distances which vary in relation to the distance of a neighbouring pair of apertures (5) from the reservoir (1).

8. Apparatus as claimed in claim 7 wherein the sizes of individual apertures (5) vary, the aperture closest to the reservoir (1) being of smaller area than that of the aperture furthest from the reservoir (1).

## Patentansprüche

1. Bewässerungsvorrichtung zur Verwendung zusammen mit einem Nährboden (Nährmedium) in einem Kunststoffbeutel (nachfolgend Zuchtbeutel genannt),
welcher einen länglichen, hohlen Körper mit einer Reihe von in Längsrichtung angeordneten Öffnungen (5), der in ein Ende oder eine Seite des Zuchtbeutels einsteckbar und in eine Stellung auf der Oberfläche des im Zuchtbeutel befindlichen Nährbodens verbringbar ist, und einen mit dem hohlen Körper zur Versorgung mit Wasser verbundenen Vorratsbehälter (1) aufweist, und die Abstände zwischen den Öffnungen und/oder deren Abmessungen derart ausgewählt sind, daß das Wasser von einem gefüllten Vorratsbehälter (1) zufließt und durch jede Öffnung (5) des hohlen Körpers fließt.

2. Vorrichtung nach Anspruch 1, dadurch gekennzeichnet, daß der längliche, hohle Körper ein Rohr (4) ist, welches sich von einer Seitenwand des Vorratsbehälters erstreckt und mit diesem über eine beim Boden des Vorratsbehälters angeordnete Öffnung (3) verbunden ist.

3. Vorrichtung nach Anspruch 2, dadurch gekennzeichnet, daß das Rohr (4) von dem Vorratsbehälter (1) trennbar ist.

4. Vorrichtung nach Anspruch 2, dadurch gekennzeichnet, daß das Rohr (4) an dem Vorratsbehälter (1) einstückig angeformt ist.

5. Vorrichtung nach einem der Ansprüche 2 bis 4, dadurch gekennzeichnet, daß das von dem Vorratsbehälter (1) abgelegene Ende des Rohres (4) durch eine(n) abgerundet ausgebildete(n) Haube oder Stöpsel (6) verschlossen ist.

6. Vorrichtung nach einem der Ansprüche 2 bis 4, dadurch gekennzeichnet, daß das von dem Vorratsbehälter (1) abgelegene Ende des Rohres (4) eine weich geschnittene Form aufweist.

7. Vorrichtung nach einem der vorstehenden Ansprüche, dadurch gekennzeichnet, daß die Abstände der einzelnen, in der Reihe angeordneten Öffnungen (5) relativ zu der jeweiligen Entfernung eines benachbarten Paars der Öffnungen (5) zu dem Vorratsbehälter (1) zueinander verschieden sind.

8. Vorrichtung nach Anspruch 7, dadurch gekennzeichnet, daß die Größe der einzelnen Öffnungen (5) unterschiedlich ist, wobei die am nächsten bei dem Vorratsbehälter (1) liegende Öffnung einen kleineren Querschnitt als die am weitesten von dem Vorratsbehälter (1) entferneste Öffnung aufweist.

## Revendications

1. Dispositif irrigateur pour utilisation en combinaison avec un milieu de croissance conditionné dans un sac en plastique (appelé ci-après "sac de croissance"), ce dispositif comprenant un élément creux allongé (4) le long duquel est ménagée une série d'orifices (5), et susceptible d'être inséré dans une extrémité ou dans une face d'un sac de croissance (7), ledit dispositif étant déplacable vers une position dans laquelle il se trouve disposé à la surface du milieu de croissance présent dans le sac de croissance, et un réservoir (1) raccordé à l'élément creux (4) pour alimenter ce dernier en eau, les espaces séparant les orifices (5) et/ou les dimensions de ces derniers étant sélectionnés pour que de l'eau en provenance d'un réservoir plein (1) s'écoule en direction et au travers de tous les orifices (5) de l'élément creux (4).

2. Dispositif suivant la revendication 1, dans lequel l'élément creux allongé comprend un tuyau (4) qui s'étend vers l'extérieur partant d'une face du réservoir (1) et qui communique avec ce dernier par un orifice (3) ménagé dans la région de la base du réservoir.

3. Dispositif suivant la revendication 2, dans lequel le tuyau (4) est séparable du réservoir (1).

4. Dispositif suivant la revendication 2, dans lequel le tuyau (4) est réalisé d'une seule pièce avec le réservoir (1).

5. Dispositif selon l'une quelconque des revendications 2 à 4, dans lequel l'extrémité du tuyau (4) distante du réservoir (1) est obturée par un capuchon ou un bouchon (6) à contour lisse.

6. Dispositif selon l'une quelconque des revendications 2 à 4, dans lequel l'extrémité du tuyau (4) distante du réservoir (1) est déformée pour présenter un profil à contour lisse.

7. Dispositif selon l'une quelconque des revendications précédentes, dans lequel les orifices individuels (5) des séries d'orifices sont espacés selon un écartement qui varie en rapport avec la distance séparant une paire d'orifices voisins (5) du réservoir (1).

8. Dispositif selon la revendication 7, dans lequel les dimensions des orifices individuels (5) varient, l'orifice le plus proche du réservoir (1) ayant une surface plus petite que celle de l'orifice le plus éloigné du réservoir (1).
